# EUROPEAN PATENT SPECIFICATION

(11) **EP 1 219 926 B1**
(45) Date of publication and mention of the grant of the patent: **20.10.2010**
(21) Application number: 00830781.1
(22) Date of filing: 28.11.2000
(51) Int. Cl.: G01C 19/66

(54) **Integrated optical angular velocity sensor**
Integrierter optischer Winkelgeschwindigkeitssensor
Capteur optique de vitesse de rotation intégré

(43) Date of publication of application: 03.07.2002
(73) Proprietor: Politecnico di Bari, 70125 Bari (IT)
(72) Inventor: Armenise, Mario Nicola, 70124 Bari (IT); Armenise, Michele, 70045 Torre a Mare (BA) (IT); Passaro, Vittorio, 70125 Bari (IT); De Leonardis, Francesco, 74100 Taranto (IT)
(74) Representative: Russo, Saverio

(56) References cited:
- US-A- 5 408 492
- PATENT ABSTRACTS OF JAPAN vol. 009, no. 315 (E-365), 11 December 1985 (1985-12-11) -& JP 60 148185 A (SUMITOMO DENKI KOGYO KK), 5 August 1985 (1985-08-05)

## Description

The present invention concerns an optical sensor of angular velocity for gyroscope systems. In particular, it concerns to an integrated and miniaturised angular velocity sensor for both gyroscope systems and rotation control systems.

In general, gyroscopes are angular velocity sensors. The operation principle of optical gyroscopes is based on the Sagnac effect (see W. W. Chow, J. G. Banacloche, L. M. Pedrotti, V. E. Sanders, W. Schleich, M. O. Scully, "The ring laser gyro", Rev. Modem Physics, vol. 57, n.1, pages. 61 - 104, January 1985).

This effect occurs as a non-reciprocal phenomenon when two light beams, counter-propagating in an optical interferometer or in a resonant cavity, suffer a rotation. In fact, the beams suffer a phase shift proportional to the angular velocity of rotation. In case of active or passive resonant cavity, the Sagnac effect takes place as the difference between the resonance frequencies of the two counter-propagating laser beams proportional to the applied angular velocity of rotation. Physically, either the phase shift or the resonance frequency difference between the two beams is caused by the different optical path for the waves when the angular shifting occurs.

The most well-known application of gyroscopes is in the field of inertial navigation. Inertial navigation refers to the technique which allows the position of a moving object (aircrafts, ships, trains etc.) to be identified, by an on-board processing. A wide classification of inertial navigation systems involves the "inertial platforms" or "strapdown systems".

In the inertial platform systems, the group of accelerometers, which measures the acceleration components of an object with respect to an inertial reference system, is mounted on a platform, whose orientation is fixed to a reference co-ordinate system and independent from the orientation of the moving object. The stabilisation of this platform is carried out by the servomechanism controlled by signals emitted from the gyroscopes. On the contrary, in the strapdown technique, the accelerometers are connected to the object in motion and are affected by the inertial forces. In this case, a numerical signal processing is required to correct errors due to the inertial forces, starting from the signals coming from the gyroscopes.

Optical gyroscopes are widely used in the strapdown technique but they cannot be used in an inertial navigation system, since they do not include any rotating mechanical component. However, they are suitable to a possible integration with the Global Position System (GPS). In this case, GPS constitutes the main system of navigation being more accurate, whereas the strapdown system represents the secondary one, allowing to identify the position of the moving object when the GPS signal is not available due to radio interference.

### PRIOR ART

At the present time, commercial optical gyroscopes are represented by the optical fibre interferometric or Brillouin fibre-based active resonant cavity approach (see R. K. Kadiwar, I. P. Giles, "Optical Fiber Brillouin Ring Laser Gyroscope", Electron., Lett., vol. 25, n. 25, pp. 1729-1731, December 1989).

Optical fibre interferometric gyroscopes are the objective of various patents among which: WO 97/21981 dated 19/06/97 by LITTON SYSTEM INC., J. Priest inventor; WO 98/00682 dated 08/01/98 by HONEYWELL INC, R. Y. Liu and R. Bergh inventors.

The most recent research efforts in optical fibre interferometric gyroscopes has been concentrated to the reduction of the noise components to improve the device sensitivity, (see Y. Gronau, M. Tur, "Digital signal processing for an open-loop fiber-optical gyroscope", Appl. Optics, vol. 34, n.25, pages 5849 - 5853, September 1995; R. P. Moeller, W. K Burns, N. J. Frigo, "Open-loop Output and Scale Factor stability in a Fiber-Optical Gyroscope", J. Lightwave Technol., vol. 7, n. 2, pages 262 269, February 1989).

High efficiency techniques of signals processing after the photo-detection step have been pointed out to compensate all the errors by using a feedback system. For example the Patent WO 96/41130, dated 19/12/96 by HONEYWELL INC., A. G. Sanders inventor, proposed a device in which there is a beam splitter sensitive to the laser wavelength, and a feedback circuit which detects any possible difference between the intensities of the counter-propagating beams of the interferometric ring. Therefore, the system equalises the intensities of the two counter-propagating beams in order to eliminate any error due to the Kerr effect. Patent WO 98/36243, dated 20/08/98 by ALLIEDSIGNAL INC., S. Huang inventor, represents an interferometric gyroscope in which the random intensity noise is reduced by 3 dB.

Patent WO 99/56080 by TOKIMEC INC., Y. Okada, Y. Imamura, M. Morohoshi, K. Yamamoto inventors, eliminates the effects due to modulation gain errors by means of a feedback system which involves a digital signal processor. An optical fibre interferometric gyroscope employing an integrated optical circuit has been also patented. This device (see US Patent 00/5724462 dated 03/03/98 by HITACHI Ltd., HITACIII CABLE Ltd., T. Ido, S. Tanaka, R. Suzuki, T. Yukara inventors) includes a Y-junction working as a beam splitter and an electrooptic modulator to drive the optical fibre gyroscope under the condition of maximum sensitivity.

Solutions for increasing the thermal stability of the gyro scale factor have been also proposed. Among the solutions adopted, one particularly effective is that using an Erbium-doped fibre as a laser source in the FAS (Fibre Amplifier Source) configuration (see J. L. Wagner, M. J. F. Digonnet, II. J. Shaw, "A High-Stability Fiber Amplifier Source for the Fiber optical gyroscope", J. Lightwave Technol., vol. 15, n. 9, pages 1689 - 1694, September 1997; D. C. Hall, W. K. Burns, R. P. Moeller, "High-Stability Er3+-Doped Superfluorescent Fiber Sources", J. Lightwave Technol., vol. 13, no.7, pages 1452-1460, July 1995; D. G. Falquier, M. F. F. Digonet, H. J. Shaw, "Polarized superfluorescent fiber source", Opt. Lett., vol. 22, no. 3, pages 160-162, February 1997; P F Wysocki, M J F Digonnet, B. Y. Kim, H. J. Shaw, "Characteristics of Erbium-Doped Superfluorescent Fiber Sources for Interferometric sensor Applications", J. Lightwave Technol., vol. 12. No. 3. Pages 262-269, March 1994; I. N. Duling III, W. K. Burns, L Goldberg, "High-power superfluprescent fiber source", Opt. Lett., vol. 15, January 1990; II. G. park, K. A. Lim, Y. J. Chin, B. Y. Kim, "Feedback Effects in Erbium-Doped Fiber Ampifier/Source for Open-Loop Fiber-Optical Gyroscope", J. Lightwave Technol. vol. 15, n. 8, pages 262 - 269, August 1997).

In these cases, since the doped fibre operates both as a laser and optical amplifier, a double advantage is achieved, i.e. having a source of high power, and, at the same time, spectrally stable.

The good stability of rare earth (Er)-doped fibre sources (including elements of the lanthanum periodic group) may only be obtained by means of an accurate project which includes the optimal choice of diode laser, its power value and fibre length. However, interferometric gyroscopes with rare earth-doped fibre sources have an intrinsic disadvantage, because the characteristics of the source are sensitive to the feedback power of the gyroscope. However, it has been demonstrated that only the CW component of the feedback signal is the main source of error and, in this case, the error may be strongly reduced by some phase modulating techniques (see H.G. Park, K. A. Lim, Y. J. Chin, B. Y. Kim, "Feedback Effects in Erbium-Doped Fiber Amplifier / Source for Open-Loop Fiber-Optical Gyroscope", J. Lightwave Technol, vol. 15, n. 8, pages 262 - 269, August 1997).

Patent WO 00/00144, dated 06/01/00 by HONEYWELL INC., Ang Dick, Spencer, Timothy inventors, represents a high stability fibre source which may be used in the field of interferometric gyroscopes.

Fibre gyroscopes with an active resonant cavity use a Brillouin fibre ring as a resonant ring (see R. K. Kadiwar, I. P. Giles, "Opticalal Fiber Brillouin Ring Laser Gyroscope", Electron. Lett., vol. 25, n. 25, pages 1729 - 1731, December 1989; F. Zarinetchi, S. P. Smith, S. Ezekiel, "Optical Kerr-Effect in Fiber Optical Brillouin Ring Laser gyroscopes", IEEE Photon. Technol., vol. 5, no. 3, pages 365-367, march 1993; S. H Huang, L. Thèvenaz, K. Toyama, B. Y. Kim, H. J. Shaw, "Optical Kerr-Effect in Fiber-Optical Brillouin Ring Laser Gyroscopes", IEEE Photon. Technol., vol. 5, n. 3, pages 365 - 367, March 1993).

The operation principle of those gyroscope, called BFOG (Brillouin Fibre Optical Gyro) is based on two optical beams propagating in opposite directions into the resonant ring. If the power of the two beams overcomes the threshold of its original SBS (Stimulated Brillouin Scattering) (see L. F. Stokes, M. Chodorow, H. J. Shaw, "All-Fiber Stimulated Brillouin Ring Laser with submilliwatt pump threshold", Opt. Lett., vol. 7, n. 10, pages 509- 511, October 1982; P. Bayvel, I. P. Giles, "Evaluation of performances parameters of single-mode all-fiber Brillouin ring lasers", Opt. Lett., vol. 14, no. 11, pages 581-583, June 1989; K. Hotate, Y. Tanaka, "Analysis on State of Polarization of Stimulated Brillouin Scattering in Opticalal fiber Ring-Resonator", J. Lightwave Technol., vol. 13, no. 3, pages 384-390, March 1995; P. A. Nicati, K. Toyama, H. J. Shaw, "Frequency Stability of a Brillouin Fiber Ring Laser", J. Lightwave Technol., vol. 13, no. 7, pages 1445-1451, July 1995; Y. Tanaka K. Hotate, "Analysis of Fiber Brillouin Ring Laser Composed of Single-Polarization Single-Mode Fiber", J. Lightwave Technol., vol. 15, n. 5, pages 838 844, may 1997), then two counter-propagating beams are created within the ring, which are called Stokes waves. The frequency difference of the Stokes waves can be detected through the beat of the two beams.

US Patents 5537671, dated 16/07/96 by "The board of Trustees of the Leland Stanford Junior University", K. Toyama, P. A. Nicati, H. J. Shaw inventors, and US 5255274 dated 19/10/93 by "The Board of Trustees of the Leland Stanford Junior University", P. F. Wysochi, M. J. F. Digonet, B. Y. Kim inventors, represent two examples of BFOG.

Compared with more conventional interferometric gyroscopes, the BFOG types have the advantage of requiring fibre length which can vary from 10 to 30 metres compared to the length range from 100m to 1km, typical of interferometric gyroscopes (see Y. Tanaka, K. Hotate, "Analysis of Fiber Brillouin Ring Laser Composed of Single-Polarization Single-Mode Fiber", J. Lightwave Technol., vol. 15, n. 5, pages 838 - 844, May 1997).

Another remarkable advantage of BFOGs is that a few components are required, since it is possible to identify the value of angular velocity directly from measurements on the two Stokes beams. However, due to its active function, the BFOGs have the disadvantage of a frequency coupling phenomenon, known as "lock-in".

An efficient method for reducing this drawback has recently been proposed in literature and involves an optical dithering (see S. Huang, K. Toyama, B. Y. Kim, H. J. Shaw "Lock-in reduction technique for fiber-optical ring laser gyros", Opt. Lett., vol. 18, n. 7, pages 555 - 557, April 1993).

Optical dithering is achieved by wrapping up part of the resonant ring around two piezoelectric modulators arranged in a specular position with respect to the centre of the cavity. The effect is the same obtained by a mechanical dithering in RLG (Ring Laser Gyro).

The advantages of fibre optical gyroscopes compared to their mechanical counterparts are:
■ Reduced size
■ Reduced weight
■ Higher performance
■ Reduced maintenance costs.

Therefore fibre gyroscopes constitute an initial response to the demands of miniaturising, especially in the field of space technology which is ever more oriented to the use of small satellites of reduced size and cost.

However, fibre optical gyroscopes have the drawback of not being fully integrable on a single chip and of suffering the effects of cosmic radiations.
The first examples of angular velocity integrated optical sensors include a passive resonant cavity and are covered by the following patents: WO 99/60337, dated 25/11/99 by RICE SYSTEM INC., V. Vali, B. Youmans inventors; US 5325174 dated 28/06/94 by NORTHROP CORPORATION, J. J. Danko inventor, WO 94/00736 dated 06/01/94 by NORTHROP CORPORATION, J. J. Danko inventor; EP 0483993 by HUGHES AIRCRAFT CO (US), V. Vali, P. Brownrigg, D. Chang inventors.

In these devices the resonant cavity is a passive optical waveguide which requires the presence of a feedback circuit. An acoustooptic or electrooptic modulation allows the frequencies of the two optical counter-propagating beams to the resonance cavity to be matched. Reduction of noise due to the coupling of the two polarizations can be also carried out (see K. S. Suzuki, K. Takiguchi, K. Hotate, "Monolithically Integrated resonator Microoptical Gyro on Silica Planar Lightwave Circuit", J. Lightwave Technol., vol. 18, n. 1, pages 66 72, January 2000).

US patent n. 5,408,492 dated April 18, 1995 by Smith industries Aerospace & Defence Systems Inc., inventors G.L. Vossler, M.D. Olinger and J.L. Page, entitled "Solid medium optical ring laser rotation sensor", refers to an ring resonant cavity, utilizing light amplification by stimulated emission, formed in a solid medium provided with phase modulator devices which produce phase modulation of optical waves in the ring in a push-pull fashion, enhancing bidirectional lasing, in single longitudinal modes in each direction.

The Japanese patent n. JP 60,148,185 dated August 5, 1985 by Sumitomo Electric Ind. Ltd inventor Okamoto Kenji ,entitled "Semiconductor ring laser gyro", discloses a ring laser gyro to miniaturize and lighten the gyro, reduce power consumption and improve reliability by forming the ring laser gyro consisting of a semiconductor laser with a ring type resonator, a waveguide and a Y type coupling element on a semiconductor substrate as one chip.

### SUMMARY OF THE_INVENTION

The present invention regards an active angular velocity optical sensor of excellent performance and extremely reduced size compared with all those proposed to date. In the fields of application where it is possible to use an integrated gyroscope, the aforementioned advantages will be highlighted, not only with respect to mechanical gyroscopes but also optical fibre ones.
With the support of the figures enclosed, a description of the operation principle and structure of this invention is given as follows.
Figure 1 illustrates a top view of the invention.
Figure 2 illustrates a transverse section A of figure 1 of the structure which constitutes the gyroscope sensor, including the active cavity and the output waveguide.
Figure 3 illustrates a top view of the Y-junction.

### DESCRTPTION OF PREFERRED EMBODIMENT

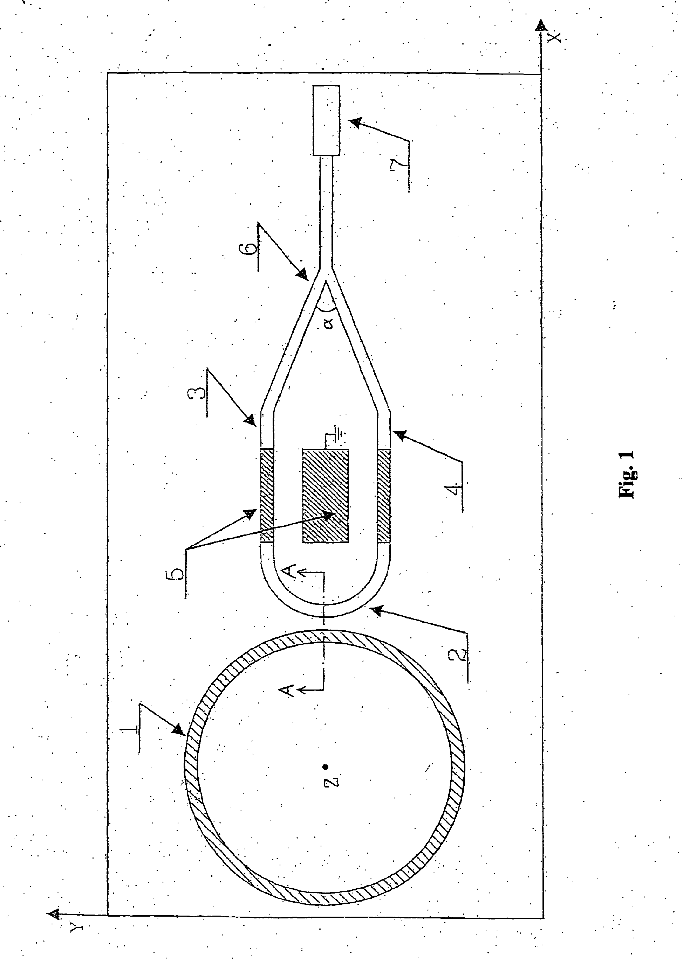

As it can be seen from Fig. 1, the integrated optical gyroscope includes a ring laser 1, which constitutes the element sensitive to the rotational velocity, an U-shaped optical waveguide 2, two straight parallel guides, 3 and 4, an electrooptic modulator 5, a Y-junction 6 and a photo-detector 7.

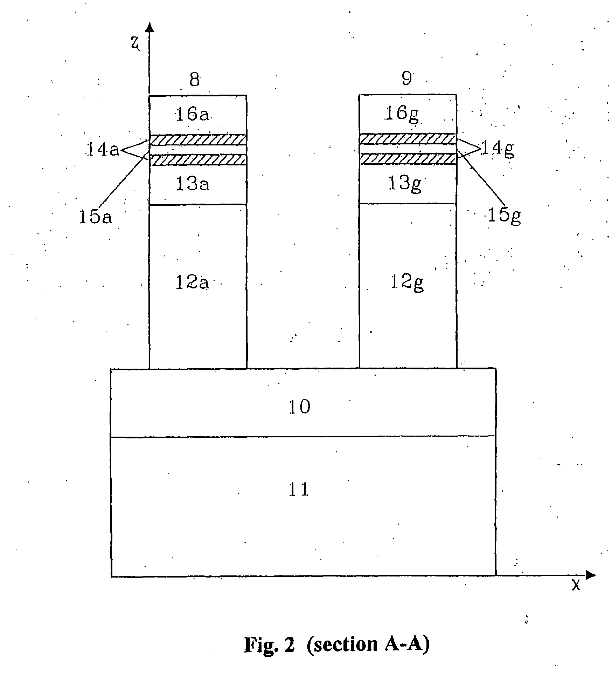

The ring laser produces two counter-propagating optical beams of different frequencies according to the Sagnac effect, when an angular rotation velocity directed around the axis normal to the plane of the ring 1 is applied.
The two waves produced are coupled to the two branches of the U-shaped waveguide 2. The Y-shaped junction 6 therefore realises the beating between the two Optical beams and the photo-detector 7, finally, measures the frequency difference and, thus, the angular rotational velocity.
Due to the active function of the ring, the present invention does not require a feedback circuit to match the frequency of the optical beams to that of the resonant cavity as it is required in K. S. Suzuki, K. Takiguchi, K. Hotate, "Monolithically integrated Microoptic Gyro on Silica Planar Lightwave Circuit", J. Lightwave Technol., vol. 18, n. 1, pp. 66 - 72, January 2000.
The transverse sections 8 and 9 of the ring laster 1 and of the U-shaped waveguide 2, respectively, are illustrated in Fig. 2. Both sections are formed by a multi-layered structure of the ridge type, placed on a buffer layer 10, which in turn is positioned above the semiconductor substrate 11 (GaAs)
The multilayered ridge is formed by a "Multi Quantum Well" (MQW) structure, including two buffer layers, 12a in 8 and 12g in 9, and two quantum wells, 14a in 8, and 14g in 9, and a barrier, 15a in 8 and 15g in 9, placed between two AlGaAs layers (13a and 16a in 8, and 13g and 16g in 9, respectively) of the same composition and thickness. The presence of two buffer layers 12a and 12g allows the absorption loss reduction in the substrate, since they avoid the field dispersion in the GaAs substrate.

The choice of using a single compact structure like that proposed, is due to the reason that the strong change of refractive index between the semiconductor and the air induces negligible curvature losses, also in cases of radii of the order of few micrometers. The straight waveguides 3 and 4, above which the electrooptic modulator 5 is positioned and the Y-junction 6, have a transverse section equal to that of the ring laser. The active part of the laser is formed by two quantum wells, which present a strongly anisotropic optical gain with respect to the polarizations TE and TM. In particular, the active cavity produces a strongly anisotropic optical gain which is much greater for TE than TM modes. Then, the ring laser only emits polarized TE modes, that is, it is automatically selective in polarization. This intrinsic effect of polarization selection produces the absence of any birefringence effect and coupling between the two polarizations.

The advantage achieved is that the use of architectural countermeasures to compensate the noise caused by the fluctuation of polarization is not required, as it occurs in passive integrated optical sensors (see K S. Suzuki, K Takiguchi, K. Hotate, "Monolithically Integrated resonator Microoptic Gyro on Silica Planar Lightwave Circuit", J. Lightwave Technol, vol. 18, n. 1, pp. 66 - 72, January 2000).

The number of quantum wells has been chosen in order to achieve a good trade-off between high quality factor and low current threshold.

The proposed configuration of the output coupler assures a low coupling efficiency, due to the strong asynchronism between the output U-shaped waveguide 2 and the ring 1. The advantage of having low coupling efficiency and low loss coefficients, is that it increases the quality factor of the ring 1, so reducing the minimum angular velocity detectable (quantum limit). In fact, the quantum limit is the main source of noise which limits the sensitivity of the gyroscope. The noise cannot be completely eliminated since it depends on the phenomenon of spontaneous emission which is originated in the active region of the laser. Therefore the design goal consists in reducing it as much as possible. It may be demonstrated that the quantum limit of the ring laser is strongly affected by the optical losses of the cavity.

The mathematical model of the present invention also involves the study of the quantum limit and lock-in dependence on the scattering caused by the roughness of the ridge waveguide side walls of the ring 1.
The curvature radius of the U-shaped output waveguide 2 is much smaller than that of the ring laser 1, allowing a significant reduction of occupation area on the chip.
The geometry of the U-shaped coupling device in Fig. 1 presents a much shorter coupling length than the curvature radius of the same output waveguide, which allows to avoid a periodic power exchange between the guide 2 and the ring laser.
The minimum separation between the external guide and the ring must be relatively narrow to get the desired coupling, since the fields are strongly confined within the two ridge structures.

The electrooptic modulator 5, (Fig. 1) is a "push-pull" type and works by using two bias voltages. The first bias voltage is used to calibrate the device. In fact, it has a fixed value to produce a zero output corresponding to zero rotational velocity.
Its determination is only affected by the noise components of the detector. The second bias voltage is used to distinguish the output signals of the detector 7, corresponding to two rotational velocities of equal module but having opposite directions.

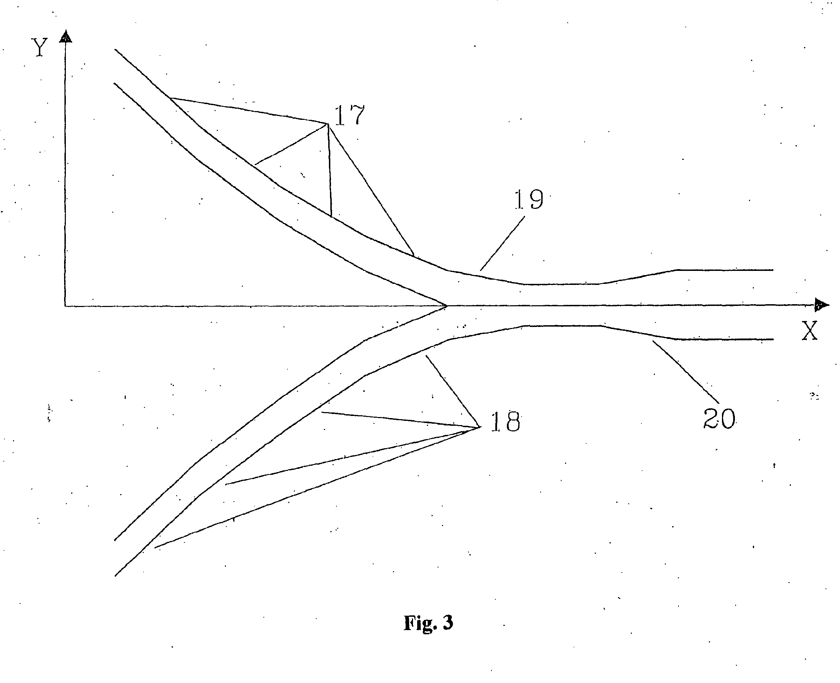

The optical combiner, as shown in Fig. 1, consists in a Y-junction 6.
The Y-shaped guide, as Fig. 3 illustrates, allows to recombine the two straight waveguides 3 and 4, and comprises a series of optimized sections of divergent straight guides, 17 and 18, in Fig. 3, and a couple (19 and 20) of tapered elements. This structure allows the radiation losses corresponding to the branching-off point to be reduced.
Due to the small size of the device, the lock-in phenomenon cannot be avoided by means of the mechanical dithering technique. However, it can be demonstrated that, in the lock-in region, the two optical beams coming from the ring laser are phase shifted by a time constant value, which is a function of the rotation velocity.

At the output of the photo-detector, a circuit must be included to process the signal carrying the information to produce the corresponding output signal. The identification of the operating regions depends on the initial setting.

According to the current technology, the technological processes involved in the fabrication of the structure under consideration are: Molecular Beam Epitaxy (MBE), Electronic Beam lithography (EB), Reactive lon Etching (RIE). In conclusion, a summary of the main advantages of gyroscopes based on the sensor of angular velocity proposed, compared with the state-of-the-art gyroscopes and those mentioned in the present description, follows:
• strongly reduced size allowing integration on a single chip;
• Active function mode.
• Absence of any matching technique between the optical beam frequencies and the cavity resonant frequencies;
• High polarization selectivity and, then, absence of feedback to reduce errors due to the coupling of the two different polarizations.
• Negligible curvature losses due to the strong optical field confinement.
• High quality factor.
• Low quantum limit.
• High sensitivity, also suitable for satellite application.
• Small influence of lock-in effect.

## Claims

1. A miniaturised integrated optical sensor of angular velocity for gyroscope systems comprising
a ring active cavity (1)for generating counter-propagating optical beams,
a U-shaped output waveguide (2), comprising a curved section for coupling said optical beams from the ring cavity (1) and comprising two straight parallel waveguide branches (3, 4),
a push-pull electro-optic modulator (5) positioned above said waveguide branches (3, 4) for calibrating the device and for distinguishing the direction of rotational velocity by application of two respective bias voltages,
a Y-shaped junction (6), comprising two input branches connecting said waveguide branches (3, 4) for producing the beat signal between the optical beams exiting said waveguide branches and an output branch,
an integrated photo-detector (7) arranged at said output branch for measuring the frequency difference of the beat signal,
wherein the ring cavity, the U-shaped waveguide device and the Y-shaped junction have a multilayer ridge structure including a Multi Quantum Well structure.

2. Optical sensor as claimed in claim 1, **characterized by** the fact that the ring active cavity is sandwiched by two layers (13a and 16a) positioned on the top of a buffer layer (12a).

3. Optical sensor as claimed in previous claims, where the U-shaped waveguide has a similar transverse section as the active cavity, including the multi quantum wells (14g and 15g), The layers (13g and 16g) and the bottom buffer layer (12g).

4. Optical sensor as claimed in previous claims, **characterized by** the tact that a buffer layer (10) is placed on the top of the semiconductor substrate (11).

5. Optical sensor as claimed in previous claims, **characterized by** the fact that the Y-junction waveguide comprises a series of optimised sections of divergent straight guides (17 and 18) and a couple of tapered clements (19 and 20).

6. Optical sensor as claimed in previous claims, **characterised by** the fact that the Y-junction waveguide has the same transverse structure as the U-shaped waveguide, including multi quantum wells (14g and 15g), layers (13g and 16g) and the bottom buffer layer (12g).

7. Optical sensor as claimed in previous claims, **characterized by** the fact that the layers are made of any type of III/V semiconductor materials.

8. Application of the integrated optical gyroscope based on the integrated sensor as claimed in previous claims in the following systems:
- missile guiding systems;
- navigation systems for any kind of motor vehicles;
- navigation systems for aeroplanes and trains;
- systems to stabilise satellite orbits.

## Patentansprüche

1. Ein integrierter und miniaturisierter optischer Sensor für die Wnkelgeschwindigkeit in Gyroskop-Systemen, umfassend:
eine ringförmige aktive Aushöhlung (1) für die Erzeugung gegenausbreitender optischer Strahlen,
eine U-förmige Ausstrahlungs-Wellenführung (2) mit einem gekrümmten Abschnitt zur Verkopplung der genannten optischen Strahlen aus der ringförmigen Aushöhlung (1), und zwei geradlinigen, parallelen Zweigen der Wellenführung (3, 4).
einen über die genannten Verzweigungen der Wellenführung (3, 4) angeordneten gegenphasigen elektro-optischen Modulator (5) für die Eichung der Vorrichtung und Unterscheidung der Drehrichtung durch Anlegen zweier entsprechender Polarisationsspannungen,
eine Y-förmige Kopplung (6) mit zwei Eingangszweigen zur Verbindung der genannten Wellenführungszweige (3, 4) zum Erzeugen der FrequenzSignals zwischen den optischen, aus den genannten Wellenführungszweigen austretenden Strahlen und einem Ausgangszweig,
einem integrierten, am genannten Ausgangszweig angebrachten Licht-Detektor (7) zur Messung der Frequenzdifferenz des Frequenzsignals, worin die ringförmige Aushöhlung, die U-förmige Wellenführungsvorrichtung und die Y-förmige Kopplung eine vielschichtige, gratförmige Bauart mit einer Multi-Quantum Schacht-Struktur haben.

2. Ein optischer Sensor gemäß Anspruch 1, **dadurch gekennzeichnet, dass** die ringförmige aktive Aushöhlung zwischen zwei über eine Pufferschicht (12a) gelegten Schichten (13a und 16a) eingeschlossen ist.

3. Ein optischer Sensor gemäß den vorhergehenden Ansprüchen, worin die U-förmige Wellenführung einen ähnlichen Querschnitt wie die aktive Aushöhlung, einschließlich den Multi-Quantum Schächten (14g und 15g), den Schichten (13g und 16g) und der Puffer-Bodenschicht (12g) aufweist.

4. Ein optischer Sensor gemäß den vorhergehenden Ansprüchen, **dadurch gekennzeichnet dass** eine Puffer-Schicht (10) über die Halbleiter-Trägerschicht (11) angebracht ist.

5. Ein optischer Sensor gemäß den vorhergehenden Ansprüchen, **dadurch gekennzeichnet dass** die Y-förmige Kopplungs-Wellenführung eine Reihe optimierter Abschnitte von auseinandergehenden, geradlinigen Führungen (17 und 18) und ein Paar von sich verjüngenden Elementen (19 und 20) umfasst.

6. Ein optischer Sensor gemäß den vorhergehenden Ansprüchen, **dadurch gekennzeichnet dass** die Z-förmige Kopplungs-Wellenführung dieselbe Querschnittstruktur wie die U-förmige Wellenführung, einschließlich der Multi-Quantum-Schächte (14g und 15g), Schichten (13g und 16g) und der Puffer-Bodenschicht (12g) aufweist.

7. Ein optischer Sensor gemäß den vorhergehenden Ansprüchen, **dadurch gekennzeichnet dass** die Schichten aus jeglicher Art von III/V HalbleiterMaterialien gefertigt sind.

8. Anwendung des integrierten, auf den integrierten Sensor gemäß den vorhergehenden Ansprüchen beruhenden Gyroskops in den folgenden Systemen:
- Raketen-Führungssystemen,
- Navigationssystemen für jede Art von Motorfahrzeugen,
- Navigationssystemen für Flugzeuge und Züge,
- Systeme zur Stabilisierung von Satellitenbahnen.

## Revendications

1. Senseur optique intégré miniaturisé de vitesse angulaire pour des systèmes à gyroscope comprenant :
une cavité annulaire active (1) pour générer des rayons optiques à propagation contraire,
une guide d'onde (2) de sortie à U, comprenant une partie courbée pour coupler les dits rayons optiques de la cavité annulaire (1) et comprenant deux branches (3, 4) de guide d'onde droites et parallèles,
un modulateur électro-optique tire-pousse positionné au dessus des dites branches (3, 4) de la guide d'onde pour calibrer le dispositif et pour distinguer la direction de vitesse de rotation par l'application de deux respectives tensions de sollicitation,
un joint (6) à forme de Y, comprenant deux branches d'entrée connectant les dites branches (3, 4) de la guide d'onde pour produire le signal de battement entre les rayons optiques sortant des dites branches de la guide d'onde et une branche de sortie,
un photo-détecteur intégré (7) disposé en correspondance de dite branche de sortie pour mesurer la différence de fréquence du signal de battement,
dans lequel la cavité annulaire, le dispositif à U de la guide d'onde et le joint à Y ont une structure nervée multicouches incluant une structure Multi Quantum Well.

2. Senseur optique selon la revendication 1, **caractérisé en ce que** la cavité annulaire active est fermée entre deux couches (13a et 16a) positionnées à la sommité d'une couche tampon (12a).

3. Senseur optique selon les précédentes revendications, dans lequel la guide d'onde à U a une section transversale similaire à la cavité active, incluant les puits multi quantum (14g et 15g), les couches (13g et 16g) et la couche tampon de fond (12g).

4. Senseur optique selon les précédentes revendications, **caractérisé en ce qu'**une couche tampon (10) est placée sur la sommité du substrat semi-conducteur (11).

5. Senseur optique selon les précédentes revendications, **caractérisé en ce que** la guilde d'onde du joint à Y comprend une série de parties optimisées de guides droites divergentes (17 et 18) et une paire d'éléments présentant une contracture.

6. Senseur optique selon les précédentes revendications, **caractérisé en ce que** la guide d'onde du joint à Y a la même structure transversale de la guide d'onde à U, incluant des puits multi quantum (14g et 15g), des couches (13g et 16g) et la couche tampon de fond (12g).

7. Senseur optique selon les précédentes revendications, **caractérisé en ce que** les couches sont faites par chaque type de matériaux semiconducteurs III/V.

8. Application du gyroscope optique intégré basé sur le senseur intégré selon les précédentes revendications dans les systèmes suivants :
- systèmes de guide de missiles ;
- systèmes de navigation pour chaque genre de véhicules à moteur;
- systèmes de navigation pour des avions et des trains ;
- systèmes pour stabiliser les orbites des satellites.
